# EUROPEAN PATENT APPLICATION

(11) **EP 1 148 498 A1**
(43) Date of publication of application: **24.10.2001**
(21) Application number: 99954456.2
(22) Date of filing: 11.11.1999
(51) Int. Cl.: G11B 23/033

(54) **MAGNETIC DISK CARTRIDGE**

(30) Priority: 30.11.1998 JP 33874498; 24.03.1999 JP 7959699
(71) Applicant: FUJI PHOTO FILM CO., LTD., Kanagawa-ken, 250-0123 (JP)
(72) Inventor: KATO, Shinichi, Fuji Photo Film Co., Ltd., Odawara-shi, Kanagawa-ken 250-0001 (JP); SOHDA, Hiroshi, Fuji Photo Film Co., Ltd., Odawara-shi, Kanagawa-ken 250-0001 (JP); FUJIWARA, Morio, Fuji Photo Film Co., Ltd., Odawara-shi, Kanagawa-ken 250-0001 (JP); OISHI, Kengo, Fuji Photo Film Co., Ltd., Odawara-shi, Kanagawa-ken 250-0001 (JP)
(74) Representative: Grünecker, Kinkeldey, Stockmair & Schwanhäusser Anwaltssozietät
(86) International application number: JP9906279
(87) International publication number: WO0033308

(57) **Abstract**

A magnetic disk cartridge 1, which has an improved structure for preventing a shutter from falling off the magnetic disk cartridge 1 upon distortion of a casing due to shock of dropping, bending, etc., houses a rotatable circular magnetic disk medium 6 in the casing C formed by combining an upper shell 2 and a lower shell 3. A restrainer projection 47 is provided at a position between an edge of a connector plate 42 of the shutter 4 for opening/closing an opening 11 for receiving the magnetic head and the catch portion 46 on the connector plate 42 for catching one end of an elastic member 7. The restrainer projection 47 projects into a slit-like opening 19, in which the catch portion 46 slides, to restrain distortion of the upper shell 2 and the lower shell 3 in directions of straitening the slit-like opening 19.

## Description

### TECHNICAL FIELD

The present invention relates to a magnetic disk cartridge having a magnetic disk medium housed in a casing formed by combining an upper shell and a lower shell, in which the magnetic medium is rotated when used for recording and reproducing data.

### BACKGROUND ART

Heretofore, there have been suggested magnetic disk cartridges each having a magnetic disk (i.e., what is called a floppy disk) housed in a flat casing, the magnetic disk including magnetic layers formed on both sides of a circular base plate (e.g., a flexible sheet of polyester) and being rotated to cause a magnetic head to magnetically record data onto the magnetic layers. Such magnetic disk cartridges are mainly used as recording media for computers because of the ease of handling and low costs thereof.

Provided on the casing of the above magnetic disk cartridge are an opening for receiving the magnetic head inserted thereto and a shutter for opening/closing the opening. The shutter is urged by an elastic member in a direction of closing the opening.

The shutter includes upper and lower face plates provided along upper and lower faces of the casing and a connector plate provided along a front end face of the casing. The connector plate is provided with a catch portion projecting inward for catching one end of the elastic member. The front end face of the casing is provided with a slit-like opening in which the catch portion moves in a sliding motion.

The shutter further includes a plurality of guiding claws projecting inward. A guiding groove into which the guiding claws are inserted is formed in an area adjacent to an edge of the casing, the guiding groove extending in a direction substantially perpendicular to the inserting direction for the cartridge. The guiding claws move along the guiding groove to open/close the shutter and to define opening/closing positions of the shutter. At the same time, engagement between the guiding claws and the guiding groove prevents the shutter from falling off the casing.

However, when the casing is subjected to shock due to dropping or the like, pressure, bending force, etc., insufficient engagement between the guiding claws projecting inward from the shutter and the guiding groove on the casing may cause an operational defect such as the shutter falling off the casing or some of the guiding claws disengaging from the guiding groove to slide onto a face of the casing.

That is to say, as the casing of the magnetic disk cartridge is thin, it is difficult to secure sufficient depth for the recessed guide groove and thus sufficient projecting height for the guiding claws of the shutter. In addition, as the slit-like opening is opened on the front-end face of the casing provided with the guiding groove, thin upper and lower wall portions on the upper and lower shells in the periphery of the slit-like opening, are especially susceptible to bending. Therefore, when the casing provided with the shutter bends in directions of straightening the slit-like opening upon dropping thereof or the like, the guiding groove may be dented to make the guiding claws susceptible to falling off from the guiding groove. In that case, the shutter may fall off the casing or may become slanted after the guiding claws on one side disengage from the guiding groove.

To overcome the above-described problems, the first object of the present invention is to provide an improved magnetic disk cartridge realizing more stable fixation of the shutter to the casing by restraining distortion of the shells in the area around the slit-like opening upon dropping of the casing or the like.

Such a magnetic disk cartridge of the present invention is provided with a center core member in a central portion thereof. The center core member fixes the magnetic disk medium to a fixation flange to define a rotation axis thereof. At the same time, a circular hub of the center core member engages with a tip of a rotational spindle shaft of a drive to receive a rotational driving force therefrom.

The casing of the above magnetic disk cartridge is provided with an opening for receiving a magnetic head inserted thereto and a shutter for opening/closing the opening. A hub hole for exposing the hub of the center core member is opened on the bottom face of the above magnetic disk cartridge. Although a center pin of the spindle shaft is inserted into and caught in a center hole of the hub of the center core member while the above magnetic disk medium is driven in a rotational motion, initial positions are not matched between a driving pin and a hole for the driving pin opened at a position displaced from the center. The driving pin will be caught in the hole for the driving pin only once per rotation of the spindle shaft, so that a chucking operation is realized.

Herein, while the center core member is caught and supported by the spindle shaft after the magnetic disk cartridge is inserted into a drive, the center core member will be kept in a slanting state until the driving pin is caught in the hole for the driving pin. The center core member may be in the slanting state also when inserting or taking the magnetic disk cartridge into or out of the drive. Such a slanting state may make the magnetic disk cartridge unusable by causing the hub of the center core member to slide onto an inner peripheral edge of the hub hole opened on the bottom face of the casing.

There has been a demand for storage expansion for the magnetic disk cartridge described above. The magnetic disk cartridge with expanded storage requires higher rotational speed to achieve improved data transfer rate. Thus, when the storage of the magnetic disk medium is expanded, it is essential for attaining desired recording/reproducing capability to accurately maintain an appropriate positional relationship between the position of the magnetic disk medium with the higher rotational speed and the height of the magnetic head used for recording and reproducing the data.

However, as the magnetic disk medium made of a flexible material may suffer surface wobbling during rotation thereof, it is difficult to maintain the appropriate positional relationship between such a magnetic disk medium and the magnetic head. On the other hand, as the range of penetration capability conforming a positional gap between the magnetic head and the magnetic disk medium becomes smaller as the recording density is increased, it is necessary to use more flexible material for the magnetic disk medium to increase conformability thereof in terms of positional relationship with the magnetic head.

For the above reason, the penetration capability is improved by, for example, making the width of the fixation flange of the center core member smaller to decrease connection area between the fixation flange and the magnetic disk medium, i.e., to reduce restriction due to connection between the inner periphery of the magnetic disk medium and the center core member so that the magnetic disk medium becomes more flexible.

In addition, external dust caught between the magnetic head in recording/reproducing operation thereof and the magnetic disk medium occasionally damage the recording surface or cause the problem of drop-outs etc. Influence of such dust is a serious problem for the magnetic disk medium of high recording density.

For the above reason, a sealing member made of rubber etc. is often pressed onto the peripheral area of the hub hole opened on the bottom face of the magnetic disk cartridge inserted into the drive to prevent the external dust from entering the magnetic disk cartridge through the hub hole during operation of the magnetic disk cartridge.

However, when the sealing member is pressed onto the bottom face of the casing of the magnetic disk cartridge as described above, the bottom face of the shell may be distorted to squeeze the inner area thereof. In such a case, the amount of possible shell flakes becomes larger because of friction between the center core member and the inner peripheral edge of the hub hole. Then, such shell flakes may in turn stick to the magnetic disk medium like the dust to cause the same problem as described above.

For the above reason, in the present invention, occurrence of the shell flakes is restrained by beveling the inner peripheral edge of the hub hole opened on the lower shell to provide a tapered portion for avoiding contact between the inner peripheral edge and the center core member. However, formation of such a tapered portion may in turn increase occurrence of the slide-on phenomenon of the hub upon slanting of the center core member.

The slide-on phenomenon occurs especially frequently in a magnetic disk cartridge with high recording density having the center core member provided with a fixation flange of a reduced outer diameter. There has been a demand for improvements in this respect.

Accordingly, the second object of the present invention is to provide a magnetic disk cartridge including a tapered portion provided on the inner peripheral edge of the hub hole, which concurrently achieves desirable rotation of the magnetic disk by preventing the center core member from sliding onto the hub hole.

### DISKLOSURE OF THE INVENTION

A magnetic disk cartridge of the present invention for achieving the first object described above houses a circular magnetic disk medium in a rotatable manner in a casing formed by combining an upper shell and a lower shell, the casing being provided with an opening for receiving a magnetic head inserted thereto, a shutter for opening/closing the opening for receiving the magnetic head inserted thereto, and an elastic member for urging the shutter in a closing direction; wherein the shutter includes upper and lower face plates provided along upper and lower faces of the casing and a connector plate provided along a front end face of the casing, the connector plate being provided with a catch portion projecting inward for catching one end of the elastic member, and the front end face of the casing being provided with a slit-like opening in which the catch portion moves in a sliding motion; and wherein a restrainer projection is provided on the connector plate at a position between an edge thereof and the catch portion, the restrainer projection projecting into the slit-like opening to restrain distortion of the upper shell and the lower shell in directions of straightening the slit-like opening.

The restrainer projection is preferably provided on a substantially T-shaped shutter, in which lengths of portions of the face plates including guiding claws are shortened with respect to the inserting direction.

According to the present invention as described above, distortion of the slit-like opening can be restrained in an area between the edge of the connector plate and the catch portion of the magnetic disk cartridge equipped with the shutter, especially in an area around the guiding claw; as the restrainer projection for restraining distortion of the upper and lower shells is provided on the connector plate at the position between the edge thereof and the catch portion projecting inward for catching the end of the elastic member urging the shutter in the closing direction, the restrainer projection projects into the slit-like opening, in which the catch portion moves in the sliding motion, to restrain distortion of the upper and lower shells in directions of straightening the slit-like opening. Thus, reliability of the magnetic disk cartridge is improved as the disengagement between the guiding claw of the shutter and the guiding groove may be prevented even when the magnetic disk cartridge is subjected to the shock of dropping or the like.

A magnetic disk cartridge of the present invention for achieving the second object described above houses a circular magnetic disk medium made of a flexible material in a rotatable manner in a casing formed by combining an upper shell and a lower shell, the circular magnetic disk medium being fixed to a fixation flange of a center core member, in which a hub hole for exposing a circular hub of the center core member is opened substantially at the center of the bottom face of the lower shell; wherein an inner peripheral edge of the hub hole is beveled to provide a tapered portion, while an inner surface of the upper shell is provided with a projected restrainer rib in an area adjacent to an outer periphery of the fixation flange of the center core member; and wherein the restrainer rib is provided at an appropriate position to abut against the fixation flange upon slanting of the center core member to restrain the slanting.

The center core member is preferably constructed as a molded resin member in general, provided with a circular metal member fixed onto the bottom face of the hub thereof.

According to the present invention as described above, the slide-on phenomenon of the hub of the center core member onto the hub hole, which may make the magnetic disk cartridge unusable, is effectively prevented even when the diameter of the fixation flange of the center core member is reduced; as the inner peripheral edge of the hub hole is beveled to provide the tapered portion for reducing the amount of possible dust generated because of friction between the center core member and the inner peripheral edge of the hub hole, and as the inner surface of the upper shell is concurrently provided with the projected restrainer rib in the area adjacent to the outer periphery of- the fixation flange of the center core member, the restrainer rib being provided at the appropriate position to abut against the fixation flange upon slanting of the center core member to restrain the slanting.

Accuracy of the engaging position with respect to the spindle shaft can be improved by constructing the center core member as the molded resin member in general, provided with the circular metal member fixed onto the bottom face of the hub thereof.

### BRIEF DESCRIPTION OF THE DRAWINGS

Figure 1 is a bottom view of a magnetic disk cartridge according to the first embodiment of the present invention,
Figure 2 is a plane view of the magnetic disk cartridge in Figure 1 showing major components thereof,
Figure 3 is a sectional view taken along the line III-III in Figure 1, in which illustration of the internal structure is omitted,
Figure 4A is a front elevational view of a shutter showing major components thereof,
Figure 4B is a sectional plane view of a central portion of the shutter,
Figure 5A is a front elevational view of a shutter of another type showing major components thereof,
Figure 5B is a sectional plane view of a central portion of the shutter shown in Figure 5A,
Figures 6A and 6B are perspective views of a shutter of still another type showing major components thereof,
Figure 7 is a broken perspective view of a magnetic disk cartridge according to the second embodiment of the present invention, showing upper and lower shells and a magnetic disk medium thereof,
Figure 8 is a sectional front elevational view of the magnetic disk cartridge in Figure 7 showing major components thereof,
Figure 9 is the same sectional front elevational view now illustrating a slanting state of the center core member, and
Figure 10 is a sectional view showing a center core member of another type.

### BEST MODE FOR CARRYING OUT THE INVENTION

Now, a first embodiment of the present invention achieving the first object described above will be described in detail with reference to the accompanying drawings.

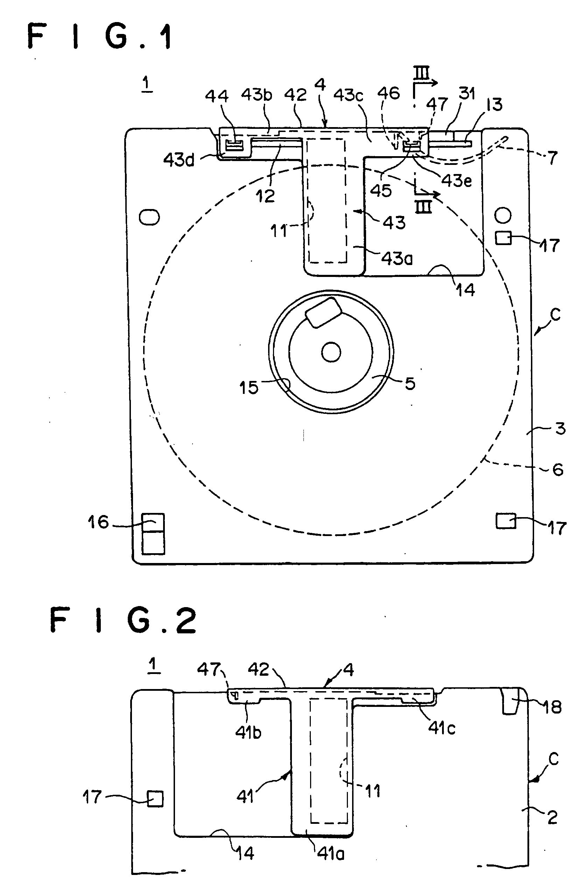

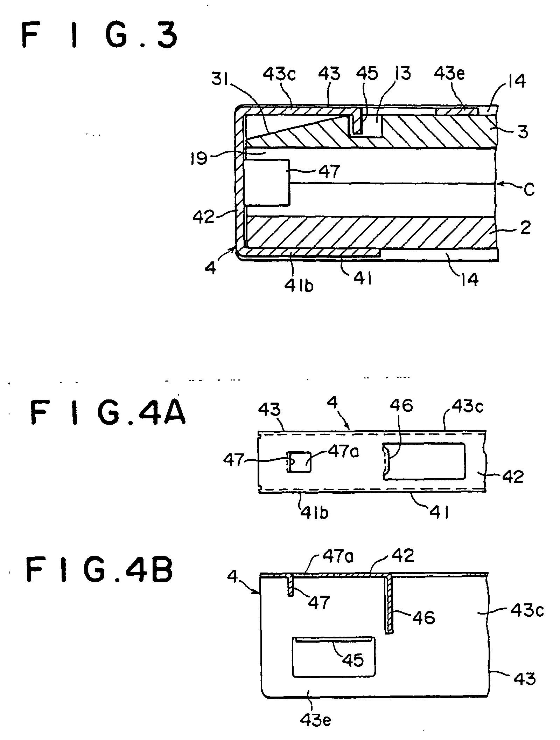

Figure 1 is a bottom view of an exemplary magnetic disk cartridge, Figure 2 is a plane view showing major components thereof, and Figure 3 is a sectional view taken along the line III-III in Figure 1, in which illustration of the internal structure is omitted. In the following description, up and down directions refer to those in the state shown in Figure 2, and right and left directions refer to those in each respective drawing.

The magnetic disk cartridge 1 houses in a rotatable manner a circular magnetic disk medium 6 fixed to a center core member 5 at a central portion thereof, in a flat casing (rigid casing) C formed by combining inner faces of an upper shell 2 and a lower shell 3 facing each other. The upper shell 2 and the lower shell 3 are made of synthetic resin such as acrylonitrile-butadiene-styrene copolymer. The center core member 5 fits into a hub hole 15 opened on the bottom face of the casing C, and is magnetically caught on a rotational spindle shaft of a drive (not shown) to transmit rotational force to the magnetic disk medium 6. The magnetic disk medium 6 includes magnetic layers formed on both sides of a circular base plate (e.g., a flexible sheet of polyester) .

Each of the upper shell 2 and lower shell 3 of the casing C is provided with a rectangular opening 11 extending from the front end portion of the casing C toward the central portion thereof for receiving the magnetic head inserted thereto. A shutter 4 capable of sliding freely in right and left directions in the figure is coupled to the front end portion of the casing C for opening and closing the openings 11. The shutter 4 is urged by an elastic member 7 in a closing direction. A shallow slide groove 14 is formed on each side of the casing C in a sliding area for the shutter 4.

The elastic member 7 consisting of a coiled spring with a small diameter is fixed in a bent form to one front corner of the casing C toward which the shutter 4 moves to open the openings 11, wherein one end of the elastic member 7 is caught on a catch portion 46 of the shutter 4 as described later via a slit-like opening 19 (see Figure 3) opened on the front end face of the casing C, and wherein the other end of the elastic member 7 is caught on the casing C. The shutter 4 in a normal state is urged by the elastic member 7 in the closing direction to cover the openings 11.

For example, the shutter 4 may be made out of a stainless steel plate, an aluminum plate, or plastics such as polyacetal resin. The shutter 4 includes an upper face plate 41 for covering the upper face of the front end portion of the casing C (see Figure 2), a lower face plate 43 for covering the lower face (see Figure 1), and a connector plate for covering the front end face of the casing C, connected to each other at right angles.

The upper face plate 41 (or the lower face plate 43) is formed substantially in a T-shape viewed in a plane view, and includes a covering portion 41a (or 43a) substantially having a rectangular shape for covering the opening 11, and left and right front frame portions 41b and 41c (or 43b and 43c) extending horizontally in left and right directions along the front edge of the casing C from the front end of the covering portion 41a (or 43a).

Left and right guiding portions 43d and 43e projecting backward are provided at edges of the left and right front frame portions 43b and 43c of the lower face plate 43, respectively, wherein each of the left and right guiding portions 43d and 43e is provided with either one of two guiding claws 44 and 45 bent to project in a direction vertical to the surface of the lower face plate 43. In addition, the catch portion 46 projecting inward for catching one end of the elastic member 7 is provided (see Figure 4) on the inner surface of the connector plate 42 of the shutter 4 at a position near the right-hand guiding claw 45 (when viewed in Figure 1). The catch portion is inserted into the slit-like opening 19 to move in a sliding motion corresponding to the opening/closing operation.

Each of the slide grooves 14 on the upper and lower faces of the casing C in which the shutter 4 slides includes: a portion of a rectangular shape in which the covering portion 41a or 43a of the upper or lower face plate 41 or 43 slides in the opening direction and which also ranges over a sliding area for the edge of the front frame portion 41b or 43c on the side closer to the elastic member 7, and a narrow portion having a width corresponding to the front-to-rear width of the front frame portion 41c or 43b (or the front-to-rear width of the guiding portion 43d for the lower face plate 41) in which the front frame portion 41c or 43b slides.

In the front end portion of the lower shell 3 of the casing C, recessed guiding grooves 12 and 13 extending horizontally in which the guiding claws 44 and 45 slide, respectively, are formed on opposite sides of the opening 11 at positions corresponding to the guiding claws 44 and 45 of the shutter 4. In addition, tapered planes 31 (see Figure 3, where one of them is omitted from the figure) are formed in front of the guiding grooves 12 and 13 in the front end portion of the lower shell 3, respectively, for facilitating engagement between the guiding claws 44 and 45 and the guiding grooves 12 and 13.

On the shutter 4 as described above, a restrainer projection 47 projecting inward in a direction parallel to the catch portion 46 is provided in a bent form on a periphery of an opening 47a opened on the connector plate 42 at a position close to the edge of the connector plate 42, i.e., at a position between the edge of the connector plate 42 and the catch portion 46 thereon on which the elastic member 7 is caught, as shown in Figures 4A and 4B. The tip of the restrainer projection 47 is inserted into the slit-like opening 19 when the shutter 4 is coupled to the casing C, for restraining distortion of the upper shell 2 and the lower shell 3 in directions of straightening the slit-like opening 19.

The width of the restrainer projection 47 is smaller than the width of the slit-like opening 19 by an amount adequate for allowing the upper and lower shells 2 and 3 to exhibit sufficient elastic deformation to realize engagement between the guiding claw 45 and the guiding groove 13. The projecting length of the restrainer projection 47 is longer than a length allowing abutment thereon of the inner surface of the edge of the slit-like opening 19 during back-and-forth movement of the shutter 4, but shorter than the length of the catch portion 46.

A recessed groove 18 for preventing erroneous insertion is provided at one corner in the front end portion of the upper shell 2 of the casing C (see Figure 2). An indicator 16 for preventing erroneous deleting is formed on one side of the lower shell 3 at the rear end portion thereof. An identification hole 17 for identifying available storage is formed on the other side of the lower shell 3 at the rear end portion thereof.

According to the above embodiment, the restrainer projection 47 projects into the slit-like opening 19 when the shutter 4 is coupled to the casing C. Thus, when the upper and lower shells 2 and 3 are subjected to shock, pressure, bending force, etc., which may induce distortion in the directions of straightening the slit-like opening 19, a restrainer member 8 abuts on the inner surfaces of the upper and lower shells 2 and 3 to restrain the distortion of the upper and lower shells 2 and 3. Accordingly, the distortion which may bend the guiding grooves 12 and 13 can be restrained to prevent deterioration of firmness of the engagement between the guiding grooves 12 and 13 and the guiding claws 44 and 45 sliding therein, i.e., the engagement between the guiding grooves 12 and 13 and the guiding claws 44 and 45 can be secured.

As adopted in the present embodiment, formation of such a restrainer projection 47 is especially effective when each of the upper and lower face plates 41 and 43 is formed substantially in the T-shape and when the elastic member 7 adopting the coiled spring is used.

The guiding claws 44 and 45 engage with the guiding grooves 12 and 13 due to elastic deformation of the shutter 4 and elastic deformation of the upper and lower shell 2 and 3, when the shutter 4 is pressed onto and coupled to the casing C from the front-end side thereof. When the casing C is dropped after fixation of the shutter 4, however, the guiding claws 44 and 45 do not disengage from the guiding grooves 12 and 13 even upon the similar deformation of the upper and lower shells 2 and 3, as the deformation of the shutter 4 does not occur.

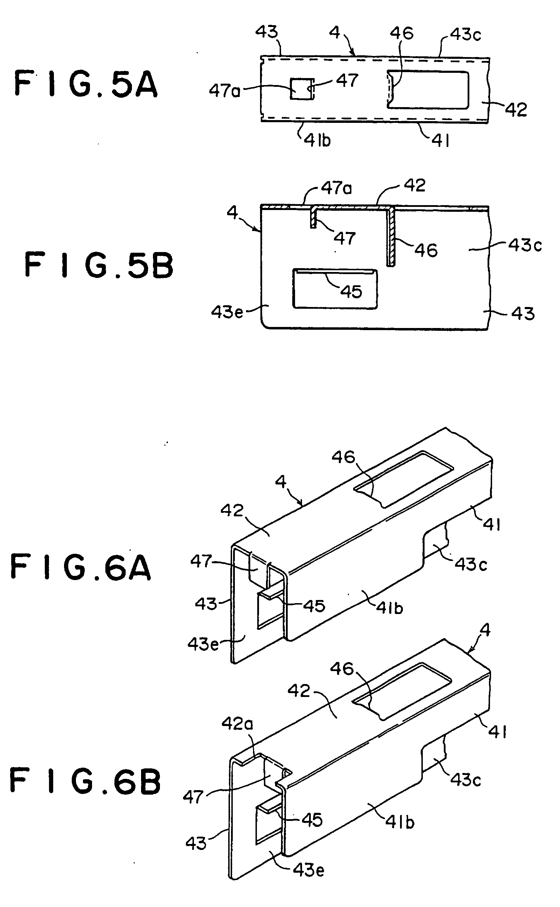

Figures 5A and 5B illustrate a shutter 4 of another type. In this example, the restrainer projection 47 is provided in a bent form on the inner periphery of an opening 47a at a position close to the catch portion 46. The remaining components are provided in a manner similar to that of Figure 4.

Figures 6A and 6B illustrate a shutter 4 of still another type, in which the restrainer projection 47 is provided in a bent form in the edge portion of the connector plate 42. In the case of Figure 6A, the restrainer projection 47 is formed in a bent form at the very edge of the connector plate 42 located at the same position as the edges of the upper and lower face plates 41 and 43. In the case of Figure 6B, a recessed notch 42a is formed in the edge portion of the connector plate 42, and the restrainer projection 47 is formed in a bent form on an inner edge of the notch 42a.

The function of each restrainer projection 47 shown in Figures 5A, 5B, 6A or 6B is the same as the function as described above.

As long as the compatibility is maintained, the structures of the casing C, the shutter 4, the magnetic disk medium 6, the center core member 5, etc., may be preferably changed, in accordance with change in the available storage, to provide, for example, means for distinguishing each magnetic disk cartridge from other magnetic disk cartridges of different available storage. Herein, the present invention may also be applied in a manner conforming to such changes.

Now, a second embodiment of the present invention achieving the second object described above will be described in detail with reference to the accompanying drawings.

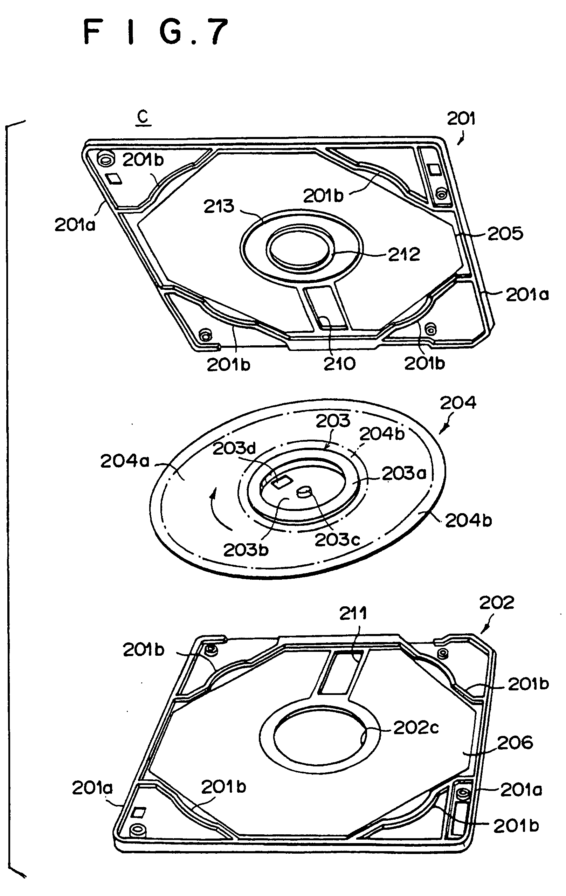

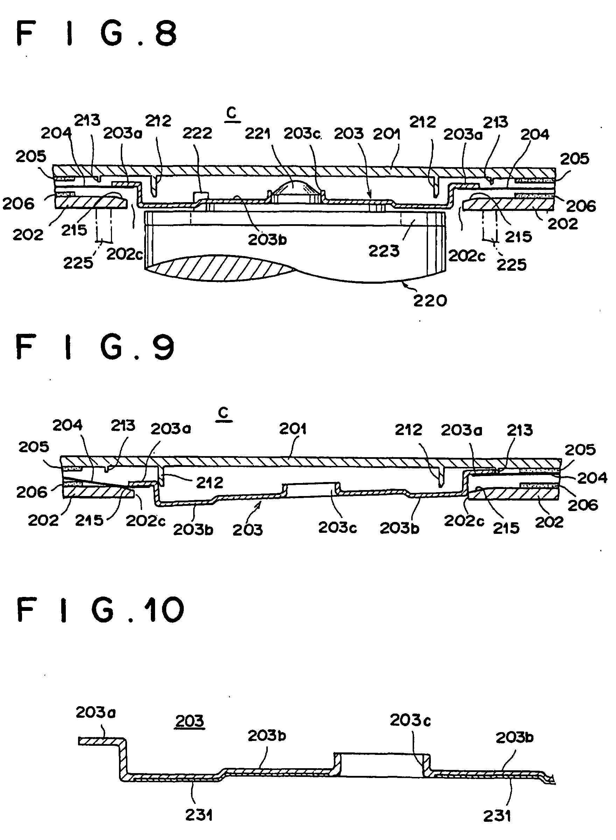

Figure 7 is a broken perspective view of a magnetic disk cartridge according to the second embodiment of the present invention, and Figure 8 is a sectional view showing major components thereof.

The magnetic disk cartridge houses in a rotatable manner a circular magnetic disk medium 204 fixed to a center core member 203 at a central portion thereof, in a flat casing (rigid casing) C formed by combining an upper shell 201 and a lower shell 202 facing each other. The upper shell 201 and the lower shell 202 are made of synthetic resin such as acrylonitrile-butadiene-styrene copolymer. An upper liner 205 and a lower liner 206 are provided on upper and lower sides of the magnetic disk medium 204, respectively.

The magnetic disk medium 204 includes magnetic layers formed on both sides of a circular base plate (e.g., a flexible sheet of polyester). A circular area not including areas adjacent inner and outer peripheries of the magnetic disk medium 204 is used as a recording area 204a, while the areas adjacent the inner and outer peripheries outside the recording area 204a are defined as non-recording areas 204b.

The center core member 203 is made by press-molding a piece of ferromagnetic metal sheet, such as magnetic stainless steel, stamped in a predetermined shape. The center core member 203 includes a fixation flange 203a provided on the outer periphery thereof for fixing the magnetic disk medium 203a, and a hub 203b provided as a recessed portion in an inner area of the fixation flange 203a. A center hole 203c is opened at the rotational center of the hub 203b. A hole 203d for a driving pin 222 is opened at a position between the. center hole 203a and the outer periphery of the hub 203b. A center pin 221 of a spindle shaft 220 (see Figure 8) is inserted into the center hole, and the driving pin 222 is inserted and fitted into the hole 203d. The hub 203b is driven in a rotational motion with the central portion of the bottom face thereof abutting upon an end face of the spindle shaft 220, while a magnet 223 attracts the outer periphery of the hub 203b.

The upper shell 201 and the lower shell 202 are substantially of flat rectangular shape provided with: outer peripheral ribs 201a and 202a for forming side walls, substantially diagonal inner ribs 201b and 202b provided at corners, and rectangular openings 210 and 211 into which a magnetic head is inserted, respectively. A circular hub hole 202c having a size corresponding to the hub 203b of the center core member 203 is opened in the central portion of the lower shell 202.

The upper liner 205 and the lower liner 206 made of bonded fabric etc. each having an octagonal shape (a circular shape is also acceptable) are attached to inner faces of the upper shell 201 and the lower shell 202, respectively, by means of ultrasonic welding or the like. The inner ribs 201b and 202b are provided along peripheries of the liners 205 and 206 on the outer sides thereof.

Although not shown in the figures, a shutter capable of sliding freely in right and left directions is coupled to the casing C for opening/closing the openings 210 and 211 into which the magnetic head is inserted.

An inner peripheral edge of the hub hole 202c on the lower shell 202 is beveled to provide a tapered portion 215 (see Figure 8). Formation of the tapered portion 215 reduces, the occurrence of contact with the lower surface of the fixation flange 203a of the center core member 203 to prevent the lower shell 202 from flaking, even if the casing C is distorted in a direction of squeezing the inner area thereof when a sealing member 225 for preventing dust from entering the inner area of the magnetic disk cartridge is pressed onto the bottom face of the outer periphery of the hub hole 202c upon insertion of the magnetic disk cartridge to a drive.

In addition, the central portion of the upper shell 201 on the inner surface thereof is provided with an annular projection 212 projecting into the area inside the fixation flange 203a of the center core member 203. An annular restrainer rib 213 which contacts with the outer periphery of the fixation flange 203a is formed on the outer side of the annular projection 212, wherein the height of the annular restrainer rib 213 is smaller than that of the annular projection 212.

As shown in Figure 8, the annular projection 212 fits to the inner periphery of the fixation flange 203a of the center core member 203 to prevent the magnetic disk medium 204 from moving in radial directions. On the other hand, as shown in Figure 9, the annular restrainer rib 213 is provided at an appropriate position for preventing the hub 203b from sliding onto the tapered portion 215 of the hub hole 202c on the lower shell 202, by abutting against the outer periphery of the fixation flange 203a to restrain movement of the center core member 203 upon slanting of the center core member 203.

In the state after the magnetic disk cartridge is inserted into the drive but before the chucking is attained, the hub 203b is kept in a slanting state as the driving pin 222 of the spindle shaft 220 is not yet caught in the hole 203d for the driving pin 222 opened on the center core member 203. According to the magnetic disk cartridge as described above, further movement of the center core member 203 is restrained as the fixation flange 203a of the center core member 203 abuts on the restrainer rib 213 even in such a slanting state. Thus, an unrotatable state can be avoided as such abutment prevents the hub 203b of the center core member 203 from sliding onto the tapered portion 215 from the inner peripheral side of the hub hole 202c (despite the fact that such a slide-on phenomenon is now more likely to occur because of formation of the tapered portion 215).

After the spindle shaft 220 rotates and the driving pin 222 is caught in the hole 203d for the driving pin 222 opened on the center core member 203, the magnetic disk medium 204 is driven in a rotational motion while the tip of the spindle shaft 220 attracts and supports the center core member 203 to fix the central position and the height of the center core member 203 to a predetermined position and height.

Figure 10 shows a center core member 203 of another type. This center core member 203 includes a fixation flange 203a and a hub 203b each molded out of resin, provided with a circular metal member 231 fixed onto the bottom face of the hub 203b. The circular member 231 is combined with the resin portion by means of insert molding, adhesion or the like, so that accuracy of the engaging position with respect to the spindle shaft 220 can be improved. Concurrently, the circular member 231 has a function of being attracted to the magnet 223.

When the entire part of the center core member 203 is formed by, for example, drawing a plate of stainless steel, a resultant product may not satisfy required dimensional accuracy for the center core member 203 with high recording density as the dimensional accuracy may be deteriorated by distortion in the shape induced by processing recovery distortion. However, as shown in Figure 10, high dimensional accuracy can be attained by adopting a molded resin member provided with the circular metal member 231, which is free from the processing recovery distortion, in the bottom portion of the hub 203b abutting against the tip of the spindle shaft 220 where the highest dimensional accuracy is required.

The circular member 231 may be provided only in a portion facing the magnet 223, and may be additionally fixed to the inner periphery of the center hole 203c.

## Claims

1. A magnetic disk cartridge housing a circular magnetic disk medium in a rotatable manner in a casing formed by combining an upper shell and a lower shell, said casing being provided with an opening for receiving a magnetic head inserted thereto, a shutter for opening/closing the opening for receiving the magnetic head inserted thereto, and an elastic member for urging the shutter in a closing direction, wherein
the shutter includes upper and lower face plates provided along upper and lower faces of the casing and a connector plate provided along a front end face of the casing, said connector plate being provided with a catch portion projecting inward for catching one end of the elastic member, and said front end face of the casing being provided with a slit-like opening in which the catch portion moves in a sliding motion, and wherein
a restrainer projection is provided on the connector plate at a position between an edge thereof and the catch portion, said restrainer projection projecting into the slit-like opening to restrain distortion of the upper shell and the lower shell in directions of straightening the slit-like opening.

2. A magnetic disk cartridge housing a circular magnetic disk medium made of a flexible material in a rotatable manner in a casing formed by combining an upper shell and a lower shell, said circular magnetic disk medium being fixed to a fixation flange of a center core member, in which a hub hole for exposing a circular hub of the center core member is opened substantially at the center of the bottom face of the lower shell, wherein
an inner peripheral edge of the hub hole is beveled to provide a tapered portion, while an inner surface of the upper shell is provided with a projected restrainer rib in an area adjacent to an outer periphery of the fixation flange of the center core member, and wherein
the restrainer rib is provided at an appropriate position to abut against the fixation flange upon slanting of the center core member to restrain the slanting.

3. A magnetic disk cartridge according to Claim 2, wherein the center core member is constructed as a molded resin member in general, provided with a circular metal member fixed onto the bottom face of the hub thereof.
